# EUROPEAN PATENT APPLICATION

(11) **EP 0 922 876 A1**
(43) Date of publication of application: **16.06.1999**
(21) Application number: 98929743.7
(22) Date of filing: 29.06.1998
(51) Int. Cl.: F16F 7/12, B29C 45/26

(54) **IMPACT ENERGY ABSORBING MEMBER**

(30) Priority: 27.06.1997 JP 18608397; 27.06.1997 JP 18608497; 12.09.1997 JP 26518797
(71) Applicant: Nippon Petrochemicals Company, Limited, Tokyo 100-8530 (JP)
(72) Inventor: INOUE, Toshio, Kawasaki-shi, Kanagawa 213-0001 (JP)
(74) Representative: Strehl Schübel-Hopf & Partner
(86) International application number: JP9802911
(87) International publication number: WO9900608

(57) **Abstract**

An impact energy absorbing member having excellent characteristics produced by injection molding of a thermoplastic resin through simplified steps, and using any of the following structures as a destruction mode stabilizing guide: 1) a cylindrical body, at least one of the directions of orientation on the inside and outside thereof being different from the axial direction of the cylindrical body; 2) a laminate of cylindrical bodies, with the directions of orientation on the planes where adjacent surfaces contact kept mutually different; and 3) a cylindrical body split at at least one plane crossing the center axis thereof, with the split surfaces mutually fit or oppose at this splitting plane; whereby stable impact absorption is possible by progressive destruction.

## Description

### TECHNICAL FIELD

Means of transport for carrying human beings, animals and dangerous objects are equipped with a shock absorbing structural member to absorb the energy of unexpectedly applied impacts. This invention relates to the shock absorbing structural member and more specifically to an impact energy absorbing member formed by injection molding of a thermoplastic resin which absorbs this impact energy irreversibly in its own particular fracture mode.

### BACKGROUND ART

Impact energy absorbing members that absorb impact energy irreversibly have been in use as a shock absorber (for example, a support member of a bumper) to absorb impacts that are produced when vehicles and vessels collide with each other or against stationary objects such as quays or bridge piers, as a shock absorber to absorb impacts when aircraft, helicopters and elevators land in the event of troubles, or as a shock absorber to absorb impacts when casks for nuclear fuel and canisters containing radioactive wastes fall.

The conventional impact energy absorbing members include those that use a liquid shock absorbing mechanism which transforms an impact energy into a frictional energy and then into a thermal energy, and those that use tube- or honeycomb-shaped structural body made of a metal material with a specific strength which consumes the impact energy in plastic deformation of the metal.

These impact energy absorbing members, though they have excellent impact absorbing characteristics, have the following drawbacks, which call for improvements.
(1) Structure is complex and easily breaks (such as complex mechanism, corrosion and the like);
(2) High manufacturing cost (such as sophisticated machining, high-energy consumption manufacturing process and the like); and
(3) Heavy (metallic structural material and the like are used).

As to the impact energy absorbing members used on vehicles, aircraft and elevators, there are growing demands for space saving and lighter weight as these transporting bodies tend to be lighter weight and employ sophisticated functions in recent years. To meet these demands, studies are being conducted on impact energy absorbing members with a high impact energy absorbing amount per unit volume or per unit weight from both material and structural perspectives.

These vehicles and aircraft have a strong needs for reduced cost, for which studies are also being made in terms of both material and structure.

With these studies under way, the above drawbacks of the conventional impact energy absorbing members have come to be recognized as very important problems more than ever before.

The synthetic resin energy absorbing member has drawn attention for its light weight and many technologies have been proposed for use mainly with vehicles. An often-employed shape is a cylindrical body, in which a compressive load is applied in the axial direction of the cylindrical body to irreversibly securely and gradually crash the energy absorbing member to absorb the impact energy.

For example, Japanese Patent Laid-Open No. 57-12412, proposes a hollow structural body having a covered surface with a net like texture of strips of fibrous composite material. This gazette discloses a glass fiber roving of No. 800E impregnated with an epoxy resin as an example of strip. Although it solves the problems of (1) a complex structure and (3) weight listed above, this method has a drawback of complicated manufacturing process and still expected for further improvement as to (2) manufacturing cost described above. Adjustments regarding various characteristic requirements depend largely on the winding angle of the strip with respect to the structural body and on the relative angle between the strips as well as on the material characteristics. Considering the complexity of the manufacturing process, this method still has problems that must be overcome before it can be applied for manufacturing a variety of impact energy absorbing members.

The Composite Science and Technology, 24 (1985) p.275-298, describes a possibility of using fibrous composite synthetic resin as the impact energy absorbing member but does not offer any description on an effective structure.

Japanese Patent Laid-Open No. 5-118370 proposes a hollow structural body which includes fibers inclined at an angle of 0-45° to the axis of the hollow body and which has its one or both ends chamfered. Although it has overcome the problems (1) and (3) mentioned above, this method, too, calls for further improvements regarding the above problem (2) as it uses a prepreg and a special mold, making the manufacture complicated. Adjustments regarding various characteristic requirements depend largely on the prepreg characteristics in addition to the material characteristics and thus are complex. This structure therefore cannot be applied generally for a variety of impact energy absorbing members without a problem.

It is important that the member when subjected to impacts is destroyed securely and gradually (progress crushing). For example, Japanese Patent Laid-Open No. 6-264949 proposes an energy absorbing member of a thermoplastic resin characterized by a structure of end portions (trigger) and by a continuous change in the cylindrical wall thickness. In a simple cylindrical member, as pointed out by this official gazette too, the cylindrical portion as a whole is subjected to a compressive load and the weakest part of it (normally the central part) is destroyed (buckled), unable to maintain its cylindrical shape. As a result, the load is not transferred to the intact remaining part, preventing a progressive fracture, limiting the final total absorbed energy to a very small level.

The above-described gazette therefore ensures the secure and gradual fracture of the member by forming the energy absorbing member into a thermoplastic resin cylindrical body characterized by the end portion structure and the continuous change in the cylindrical wall thickness.

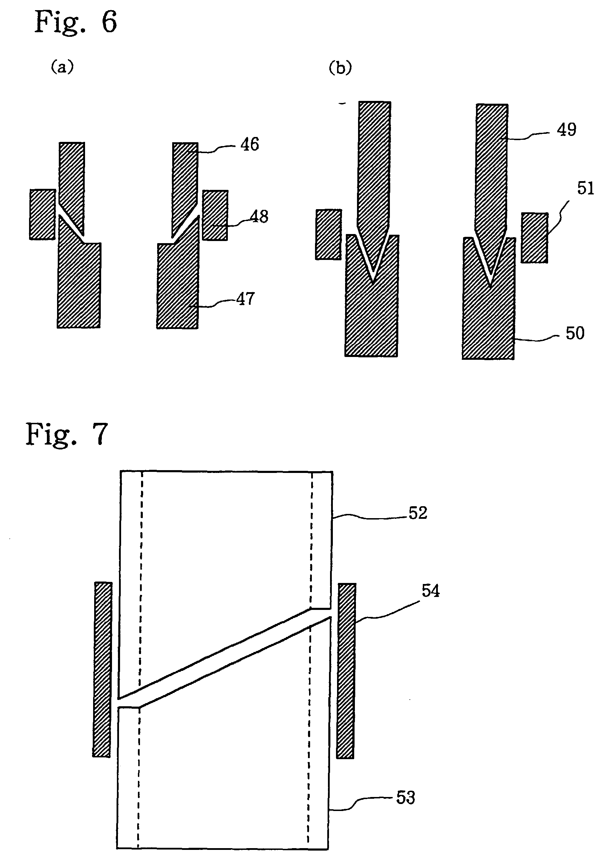

The actual structure of the member proposed in the above official gazette, however, requires a significantly complex mounting procedure as shown in Figures 7 to 9 in the gazette.

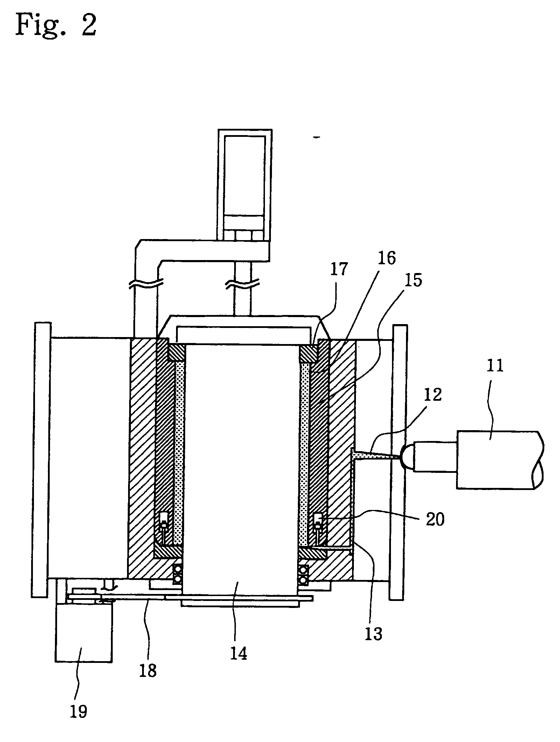

Japanese Patent Laid-Open No. 6-300068 proposes a fiber-reinforced hollow structural body having a plurality of structures with a modulus of elasticity different from that of the reinforcement fiber. This method, although it overcomes the problems (1) and (3) mentioned above, has a complex prepreg. As to the problem (2), the complexity in the structure and the manufacturing process is increased, making the cost reduction impossible, leaving much to be improved. The adjustments regarding various characteristic requirements depend largely on the prepreg characteristics in addition to the material characteristics. Considering the complexity of the manufacturing process, this method cannot be applied without a problem to the manufacture of a variety of impact energy absorbing members. Further, this official gazette discloses a method of manufacturing a hollow structural body by laminating layers of a prepreg made of carbon fibers impregnated with an epoxy resin. While Figure 2 of the above gazette discloses a four-layer structure, it is considered that the multilayer structure in practice requires 10 or more layers, of course, which will make the manufacture process complex and the resulting product expensive.

The material being studied for the impact energy absorbing member of a synthetic resin is a prepreg (long fiber)/thermosetting resin, and the characteristic of the member is evaluated by a stress feature curve produced by a strain applied in the axial direction at a constant velocity.

It has been confirmed that this characteristic is greatly influenced by the relative angle between the direction of orientation of the prepreg fiber contained in the hollow cylindrical body and the axis of the hollow cylindrical body (the direction of the axis agrees with the direction in which the compressive load is applied). The Composite Science and Technology, 24 (1985) p.275-298, shows an example in which the best characteristic value is obtained when this angle is 90 degrees. This allows an interpretation that although the impact energy absorption by the prepreg (long fiber)/thermosetting resin material is complex, the best characteristic value can be obtained by making the impact energy absorption by the breakage of fibers participate to a maximum possible extent in absorbing the impact energy. This also shows that whether the prepreg (long fiber)/thermosetting resin can provide an excellent impact energy absorbing member of a hollow cylindrical body depends on a factor greatly affecting the impact energy absorption, i.e., the ability to arbitrarily control the orientation of the filler fibers. The appropriate orientation control, however, is only possible through complex processes, as described earlier.

It is known that the thermoplastic resin or short fiber/thermoplastic resin with a controlled orientation exhibits the greatest impact energy absorption characteristic for an impact energy applied at an angle of 90 degrees to the direction of the controlled orientation. This can also be confirmed by the fact that a strongly oriented portion of ordinary injection molded products, called a skin layer, exhibits an excellent characteristic for an impact energy applied at right angles. The word orientation as referred to here means both orientations of the thermoplastic resin molecules themselves and the fiber filler and also their synergistic action. A large difference between the thermoplastic resin and the thermosetting resin is that the thermoplastic resin molecules themselves are oriented.

When the hollow cylindrical body is injection-molded with these thermoplastic resin materials, however, the resin molecules injected from a gate or the fiber fillers exhibit only a very weak orientation except where the high-speed filling and rapid solidifying conditions are met. The inner part of the molded product, called a core portion, in particular exhibits a very weak orientation.

Therefore, when the thermoplastic resin is used in molding the impact energy absorbing member of a hollow cylindrical body by an ordinary injection molding, the factors greatly affecting the impact energy absorption, i.e., the orientations of resin molecules and fiber filler, are small and no method is available for arbitrarily controlling their orientations though the thermoplastic resin has a very high moldability. This is considered to be the reason why the thermoplastic resin can not be formed into an excellent impact energy absorption member having a hollow cylindrical body.

A conventional injection-molded hollow cylindrical body was subjected to a test where a load was applied in the axial direction of the cylindrical body to cause compressive deformations and the observed fracture state of the hollow cylindrical body is as follows.

Namely at the initial stage of the test, the cylindrical body as a whole accumulates strains as it receives the load. Therefore the point is how such accumulated fracture energy from strains is released.

Common phenomenon first of all observed with ordinal injection-molded hollow cylindrical body are a deformation of the whole body and a rapid propagation of crack to result in fracture. The former occures that the body has no defect to release accumulated strain (fracture mode) before the value of the strain reach high enough to deform the cylindrical body. The latter does that the body has the above-mentioned defect, however, it is a kind of critical one to cause a catastrophic fracture. Both of them are typical type of sudden release of the accumulated strain.

The above two phenomena observed with the conventional injection-molded hollow cylindrical body both offer only a small final total absorbed energy and are far from a stable fracture and thus not desirable for a member absorbing the impact energy.

It is therefore an object of this invention to ensure that, in an impact energy absorbing member in the form of a hollow cylindrical body which is injection-molded of a thermoplastic resin, progressive shear fractures (crashing) in which small-scale fracture locations slowly moving occur or the occurance of cracks in the cylindrical body axis direction are suppressed to assure a constant stable progress of fracture and thereby improve the final total absorbed energy.

### DISCLOSURE OF THE INVENTION

A fracture mode stabilizing guide as referred to in this invention plays the role of a guide that stabilizes the destruction mode of an injection-molded cylindrical body. In more concrete terms, it has a function of causing small-scale, progressive shear fractures (crashing) with their locations slowly shifting, a function of suppressing cracks in the cylindrical body axis direction, or both of these functions. Because the fracture mode stabilizing guide for the injection-molded absorbing member of this invention has these functions, the absorbing member, when subjected to impacts, is prevented from being buckled severely around the whole circumference of the cylindrical body or from being cracked at a high speed in the cylindrical body axis direction, thereby ensuring a constant, stable absorption of impact energy.

Next, three more specific embodiments of impact energy absorbing member are shown in the following and it should be noted that the invention is not limited to these examples alone.

A first embodiment is an impact energy absorbing member having a hollow cylindrical body injection-molded of a thermoplastic resin, which is characterized by a fracture mode stabilizing guide that has a construction in which at least one of orientation directions on the inner and outer side of the cylindrical body differs from the axial direction of the cylindrical body.

The hollow cylindrical body as the impact energy absorbing member of this invention is used in a mounting condition that will cause a compressive strain in the axial direction of the cylindrical body.

That is, the impact energy absorbing member of this invention has a cylindrical body injection-molded of a thermoplastic resin, and because either the orientation direction on the inner side of the cylindrical body or the orientation direction on the outer side differs from the axial direction of the cylindrical body, a stable and progressive fracture can be assured when the cylindrical body is subjected to a compressive load in the axial direction of the cylindrical body and irreversibly fractured. It is possible to make the orientation on only the outer side or inner side differ from the axial direction, with the orientation on the other side set parallel to the axial direction. In either case, the orientation on the inner side or outer side need only to differ from the axial direction of the cylindrical body.

A second embodiment of this invention is an impact energy absorbing member having a laminated hollow cylindrical body injection-molded of a thermoplastic resin, which is characterized by a fracture mode stabilizing guide that has a construction in which orientation directions on the contacting surfaces of adjoining layers of the laminated hollow cylindrical body differ from each other.

This impact energy absorbing member is used in a mounting state that will generate a compressive strain in the axial direction of the laminated hollow cylindrical body. The impact energy absorbing member comprises a laminated hollow cylindrical body injection-molded of a thermoplastic resin, and because the orientation directions of the adjoining layers differ from each other on the contacting surfaces, a smooth and progressive crushing is assured when the laminated hollow cylindrical body is subjected to a compressive load in the axial direction and irreversibly collapses.

That is, although the adjoining layers of the laminated hollow cylindrical body are bonded together with a substantially large strength by the injection of molten resin during the second-stage molding or by a bonding agent between the adjoining layers, the fracture of the laminated hollow cylindrical body inevitably begins between adjoining inter-layers part. Because the orientation directions differ among the adjoining layers, the fracture of the laminated cylindrical body is likely to initiate first with the inter-layer part in particular, which plays a role of a fracture mode stabilizing guide that keeps the fracture mode stable and constant.

A third embodiment of this invention is an impact energy absorbing member having a hollow cylindrical structure of a synthetic resin, which is characterized by a fracture mode stabilizing guide that has a construction in which the member is divided by at least one plane crossing the center axis of the cylindrical body and the divided members are engaged with or opposed to each other at the dividing plane.

That is, in the impact energy absorbing member having a cylindrical body of a synthetic resin, the cylindrical body is divided and the divided portions are engaged with and opposed to each other at the dividing plane to form the cylindrical body. The division/engagement plane functions to induce a shear fracture and thereby assure a stable and progressive fracture of the energy absorbing member, thus working as a fracture mode stabilizing guide. The division/engagement plane can be located at any position in the axial direction as long as it can secure a constant distance from the end of the cylindrical body. Normally, it is preferably located at around the central part of the cylindrical body. As described above, the central portion is normally the weakest part where a fracture (buckling) is likely to occur, making it impossible for the cylindrical body to maintain its cylindrical shape. Taking advantage of this tendency for buckling as a means for inducing a shear fracture, it is preferred that the division/engagement plane like a belt be located near the central part of the cylindrical body.

Further, winding a band (strip body) on the outer side or the inner side, or both, of the division/engagement plane like a belt enables the direction of movement of the divided cylindrical bodies when applied with impacts to be maintained and controlled as they collapse by compressive forces. This assures a stable and progressive crushing of the member.

At the division/engagement plane a shear fracture inducing portion (also called a "trigger") of a particular shape may be provided to ensure that the impact stress is applied parallel to the center axis of the cylindrical body. In more detail, the angle that the division plane makes with respect to the axis of the cylindrical body may be set at right angles, or inclined. Alternatively, one of the divided plane may be shaped like a wedge in cross section at its end and facing the other division/engagement plane can be a corresponding to the wedge shape.

Further, the strip body wound like a belt around the outer side or inner side, or both, of the division/engagement plane may be provided with an opening at at least one location that it can be a structure with which the fracture can proceed without hindrance as the cylindrical body absorbs energy.

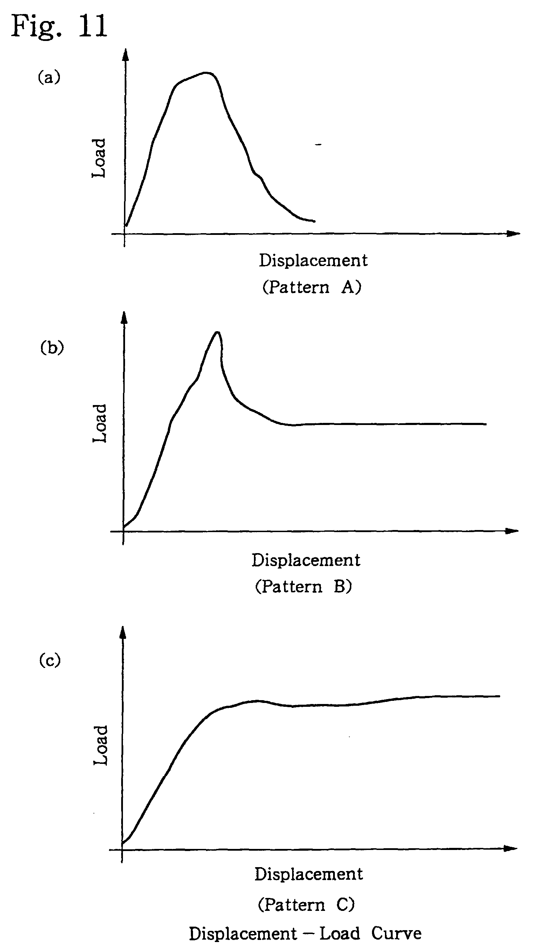

In this invention, particular fracture modes as represented by the displacement-load curve patterns B and C in Figure 11 are preferred. The pattern C showing a stable fracture mode is particularly preferred.

### BRIEF DESCRIPTION OF THE DRAWINGS

Figure 1 is a schematic view of a manufacturing apparatus for making a cylindrical impact absorbing body of this invention by injection molding using a rotary core.
Figure 2 is a schematic view showing a manufacturing apparatus used in one embodiment of this invention.
Figure 3 is a cross section showing the outline of a mold used in a first-stage molding in a second embodiment.
Figure 4 is a cross section showing the outline of a mold used in a second-stage molding in a second embodiment.
Figure 5 is cross sections of mold structures for manufacturing the impact energy absorbing member of this invention by injection molding, (a) representing the mold structure for the first-stage injection and (b) representing the mold structure for second injection.
Figure 6 is cross sections showing the structures of engagement portions of the impact energy absorbing member of this invention, (a) representing the structure of the engagement portion with a shear fracture inducing part (trigger) inclined in cross section to the axis and (b) representing the structure of the engagement portion with a shear fracture inducing part (trigger) shaped like a wedge in cross section.
Figure 7 is a schematic view of the impact energy absorbing member of this invention showing a division/engagement portion and a strip body when the cut section crosses the axis slantwise.
Figure 8 is a transverse cross section of a cylindrical body of the impact energy absorbing member of this invention which is cut at the strip body portion when the strip body has an opening.
Figure 9 is a cross section of the cylindrical body of the impact energy absorbing member of this invention when the strip body portion has differing thicknesses.
Figure 10 shows two compressive deformation test methods used in example tests.
Figure 11 shows three patterns of displacement-load curve obtained by the compressive deformation tests.

Following are reference numerals.
1: Injection molding machine, 2: Passage for molten polymer, 3: Runner, 4: Rotary core portion, 5: External mold, 6: Molding portion for the cylindrical body (cavity), 7: Bearing, 8: Chain, 9: Motor, 10: Ejector pin, 11: Injection molding machine, 12: Passage for molten polymer, 13: Runner, 14: Rotary core portion, 15: External mold, 16: Molding portion for the cylindrical body (cavity), 17: Bearing, 18: Chain, 19: Motor, 20: Ejector pin, 21: Outer mold portion, 22: Core mold portion, 23: Cavity. 24: Injection passage, 24a, 24b: Branched injection passage, 25: Molten resin, 26: Arrow indicating the direction of movement of molten resin, 27: Outer wall surface, 28: Inner wall surface, 29: First hollow cylindrical body layer, 30: Cavity, 31: Outer mold portion, 41, 42, 46, 47, 49, 50, 52, 53, 59, 61: Divided cylindrical body, 43, 44: Mold, 43a, 44a: Recessed portion, 45, 48, 51, 54, 56, 62: Strip body, 57: Opening, 58: Fracture mode stabilizing guide.

### BEST MODE FOR CARRYING OUT THE INVENTION

Because the impact energy absorbing member of this invention has a hollow cylindrical structure with both ends open, it can effectively and irreversibly absorb an impact energy of a compressive load acting on the cylindrical body in the axial direction. And thus it is a most effective form of the impact energy absorbing member of this kind. This invention also includes within its scope an impact energy absorbing member which is partly deformed by a known deforming method to increase the absorption of impact energy while keeping the hollow cylindrical structure with its open ends. Namely, as for this deformation, known deformations or design modifications to increase the absorption of impact energy include for example: 1) attaching a bottom plate to one end of the cylindrical body, 2) arbitrarily changing the wall thickness of the cylindrical body continuously or discontinuously, 3) making the areas of the openings at both ends of the cylindrical body differ from each other (in this deformation, the cylindrical body is a hollow truncated cone with the cross section along the axis forming a trapezoid), and 4) providing a rib in the circumferential direction. This invention uses a thermoplastic resin as the main material and thus these design modifications can be made freely. It is also possible to provide an arbitrary, known fracture mode stabilizing guide shape to the end portion easily.

The impact energy absorbing member of this invention uses thermoplastic resins as the material. These thermoplastic resins can be injection-molded into a hollow cylindrical body with the orientation directions on the inner side and the outer side differing from each other; a laminated hollow cylindrical body whose orientation directions on the surfaces of the adjoining layers differ from each other; and also a hollow cylindrical body which is divided at least one plane crossing the center axis of the cylindrical body with the divided portions engaged with each other or opposed to each other at this divided plane. The hollow cylindrical bodies formed in this way make an excellent impact energy absorbing member for an impact energy applied in a particular direction.

The material to be used is preferably a thermoplastic resin with a molecular structure which, when oriented, produces a high modulus of elasticity. With such a thermoplastic resin a very large effect can be produced. A main constituent unit of a representative preferred thermoplastic resin is an aromatic ring-containing radical, which is included in a main chain to form a rigid molecular structure. Among the unit radical containing the aromatic ring as the main constituent unit are, derived from for example, bisphenol A, metaxylylenediamine, terephthalic acid, 2,6-naphthalenedicarboxylic acid, and dihydric phenol.

These resins that have a rigid molecular structure which includes an aromatic ring-containing radical as a main constituent unit included in the main chain is readily available on the market. Example resins include: a polyamide having metaxylylenediamine as a main constituent unit (e.g., MXD Nylon (trade name) of Mitsubishi Gas Chemical); a polyester having terephthalic acid as a main constituent unit (e.g., polyethylene terephthalate resin and polybutylene terephthalate resin); a polyester having 2,6-naphthalenedicarboxylic acid as a main constituent unit (e.g., PEN resin); a polycarbonate and a polyester having bisphenol A as a main constituent unit; polyphenylene sulfide; polyphenylene oxide; polysulfone; polyarylate having dihydric phenol as a main constituent unit (e.g. U-polymer (trade name) of UNITIKA Ltd.); polyether ketone; polyether-ether ketone; and a thermotropic liquid crystal polymer having p-hydroxybenzoic acid, hydroxynaphthoic acid, dihydric phenol or biphenol as a main constituent unit and exhibiting an optical anisotropy when melting (e.g., Sumica Super (trade name) of Sumitomo Chemical, Xydar (trade name) of Amoco, Xenite (trade name) of Dupont, Vectra (trade name) of Hoechst-Celanese, Cyberas (trade name) of Toray, and Rodrun (trade name) of UNITIKA Ltd. and etc.).

Of these, the thermotropic liquid crystal polymer, such as a thermotropic liquid crystal polyester, is preferred as the material of this invention as it has a very rigid molecular structure which is easily oriented and, when oriented, produces an effect called a self-reinforcing capability which increases the modulus of elasticity in the direction of orientation by an enormous amount.

The thermoplastic resin may be used alone or as a mixture of a plurality of materials. It is effective to add fibrous filler materials to the thermoplastic resin for the purpose of increasing the modulus of elasticity in the direction of orientation when oriented. The fiber filler materials that may be added include glass fibers, carbon fibers, aromatic polyamide fibers (e.g., Kevlar (trade name) of Dupont), silicon carbide fibers, boron fibers, and phenol resin fibers (e.g., Kainol (trade name) of Gun ei Chemical).

It is possible to confirm by various measuring methods that the orientation directions on the inner or the outer side of the hollow cylindrical body differ from one another and that the orientation directions of the contact surfaces of the adjoining layers of the laminated hollow cylindrical body differ from one another. Such a confirmation may be made, for example, by cutting the hollow cylindrical body and the laminated hollow cylindrical body in round slices and measuring their orientation conditions in the direction of thickness by the commonly used X-ray diffraction. Other simple confirming methods include observing the condition of flows on the surface of each layer of the hollow cylindrical body and the laminated hollow cylindrical body, e.g., flow marks, and the direction of each flow. Depending on the colored state of the resin, the flow conditions on the surface may not be easy to observe. In such a case, when the blended materials are dark in color, a small amount of white pellets is mixed in the resin pellets so that the flow direction of the colors can be observed to determine the direction of orientation of each surface.

There is no limitation on the method of manufacturing the hollow cylindrical body of the impact energy absorbing member of this invention as long as it generates the above-mentioned orientations. These orientations of the hollow cylindrical body may be produced, for example, by filling the resin while rotating the mold or core portion that forms the inner or outer side of the hollow cylindrical body around the axis so that the molten resin being filled is rotated together by the frictional resistance from rotating side wall.

In the injection molding of a hollow cylindrical body by using an outer mold and a rotary core, for example, the orientations are generated as follows. With a gate provided near the end of a hollow cylindrical body forming portion (cavity) in the mold and with the rotary core rotated while injecting the resin, when the thermoplastic resin is filled in the direction of axis of the hollow cylindrical body, there are two forces acting on the molten resin, i.e., a force applied from the injection molding machine that tends to produce a molten resin flow in the same direction as the axial direction and a force generated by the frictional resistance between the rotating portion of the rotary core and the molten resin that tends to produce a molten resin flow in a direction perpendicular to the axial direction. The actual orientation will be formed in a direction where these forces balance each other. With this manufacturing process, the hollow cylindrical body as a whole will have an orientation in a direction different from the axial direction. The orientation of course includes the state of the surface concerned. It is also an effective method to rotate the outer mold and hold the core immovable while injection molding. It is also possible to produce rotating both the rotary core and the outer mold but in different directions and at different speeds.

The laminated hollow cylindrical body of the impact energy absorbing member of this invention is not limited to a particular method of manufacturing as long as it has the above-described orientations. For example, the each layer of the laminated hollow cylindrical body, which can be injection-molded through the first- and second-stage molding processes as described above or injection-molded individually, may have their orientations formed during the injection molding of each layer by rotating the mold or core part around the axis that forms the inner or outer wall of the cavity while filling the molten resin so that the molten resin being filled is rotated together by the frictional resistance from the rotating side wall.

In more detail, the each hollow cylindrical layers constituting the laminated hollow cylindrical body may, for example, be formed by: using a mold for injection molding of a hollow cylindrical layer, which comprises an outer mold and a rotary core; providing a gate near the end of a hollow cylindrical layer forming portion (cavity) in the mold; and rotating the rotary core while injecting the resin. It should be noted, however, that in case of the second-stage molding, the first-stage molded product provides an inner wall for the outer mold or an outer wall for the rotary core. With this method, during the process where the thermoplastic resin is flow filled in the axial direction, there are two forces acting on the molten resin, i.e., a force applied from the injection molding machine that tends to produce a molten resin flow in the same direction as the axial direction and a force produced by the frictional resistance between the rotating portion of the rotary core and the molten resin that tends to produce a molten resin flow in a direction perpendicular to the axial direction. The actual molten resin will be oriented in a direction where these forces balance each other. With this manufacturing process, the hollow cylindrical layer as a whole will have an orientation in a direction different from the axial direction. The orientation of course includes the state of the surface concerned. It is also an effective method to rotate the outer mold and hold the core immovable while injection molding. It is also possible to rotate both the rotary core and the outer mold but in different directions and at different speeds.

The rotating motion is normally produced in such a way that the orientation of the thermoplastic resin on the inner and outer sides of the hollow cylindrical body layer can be controlled at an angle of 10° or more to the center axis of the hollow cylindrical body. To this end, the rotation speed of the rotary portion should appropriately be determined experimentally and empirically based on the shape of the hollow cylindrical body, the filling time, the target orientation angle, and the frictional resistance between the rotating portion and the molten resin. This is because the frictional resistance is greatly affected by the mold surface coarseness, material characteristics, molding conditions and etc.. Normally, for a hollow cylindrical body 20 mm in outer diameter, 1 mm thick and 5 cm high, when the filling time is set to 1 second and the target orientation angle to 45° and when the rotating portion constitutes an inner side molding part for the hollow cylindrical body, the rough criterion of the rotating speed is 200-400 rpm.

There is no limitation on how the impact energy absorbing member of this invention is used. For example, the impact energy absorbing members may be used by itself or in combination, or combined with other impact energy absorbing members, structural members and the like.

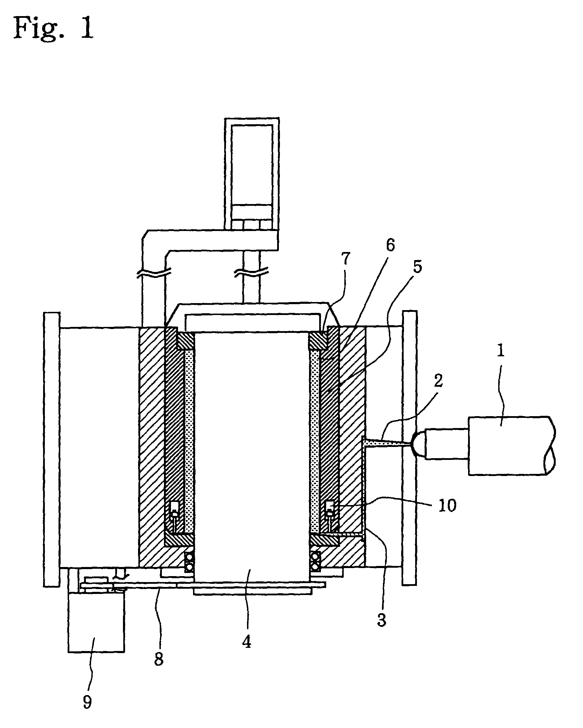

Next, by referring to Figure 1, one method of manufacturing the impact energy absorbing member of this invention will be described. In the figure, reference number 1 represents an injection molding machine, 2 a passage for molten polymer, 3 a runner, 4 a rotary core, 5 an outer mold, and 6 a cylindrical body forming portion (cavity) defined by the rotary core 4 and the outer mold 5. Designated 7 is a bearing for holding the rotating core, 8 a chain for driving the core, 9 a motor, and 10 an ejector pin. A molten resin is injected from the injection molding machine 1 through the passage 2 and the runner 3 into the cavity 6. For molding a cylindrical body of the above dimensions, the rotary core is rotated in a speed range of 100-400 rpm, preferably 200-400 rpm. The molten resin injected into the cavity is rotated together with the wall surface and oriented as the core rotates. The bearing 7, if made of an elastic material, has a little risk of seizure during the rotation of the core.

The thermotropic liquid crystal polyester resin is a thermotropic liquid crystal copolyester resin which has repeating units induced from phthalic acid/isophthalic acid/4-hydroxybenzoic acid/4,4-dihydroxydiphenyl with their molar ratio of 0.75/0.25/3/1. Observation of this resin by a polarizing microscope equipped with a hot stage shows that at temperatures 340°C or higher, the resin in a molten state exhibited an optical anisotropy.

A compound of this resin containing 30% by weight of glass fibers (with respect to the total weight of the compound) is injection-molded into a pipelike cylindrical body 20 mm in outer diameter, 1 mm thick, 150 mm long and 15 g in weight. The injection time was about 5 seconds and the cooling time about 10 second, requiring a total of about 15 seconds. The outer and inner surfaces of the formed cylindrical body were examined to check the directions of resin flows from flow marks. It was found that the direction of resin flow on the outer surface almost agrees with the axial direction of the cylindrical body and the direction of resin flow on the inner surface is inclined by about 33° to the axis of the cylindrical body.

If, for example, there is a lack of rotation torque, the rotating member slips failing to rotate together the peripheral molten resin sufficiently. The viscosity of the molten resin that affects the rotation torque varies greatly depending on the resin temperature, the mold temperature and the shear heat generation at the time of injection molding. And with the changing viscosity the frictional resistance during molding also changes. Hence, for acquiring the optimum orientation, the rotation of the rotary core 4 should preferably be set to produce an optimum and stable frictional resistance in each forming process. To make the orientation stable and optimum, it is possible that the torque of the rotating portion may be detected and controlled at an arbitrary value, as disclosed by Japanese Patent No. 2537131. This enables the control of the frictional resistance between the rotating portion and the molten resin and therefore can realize a stable and optimum orientation control.

The orientation of a hollow cylindrical body manufactured by the injection molding, in which the rotary core or the outer mold or both are rotated, is determined, as described above, by the balance between the molten resin flow in the same direction as the axial direction caused by the pressure applied from the injection molding machine and the molten resin flow of 90° to the axial direction caused by the frictional resistance between the rotating portion and the molten resin. Thus, if there is a difference in the rotating motion between the portions that form the inner side and the outer side of the hollow cylindrical body in the mold (for example, when only the portion that forms the inner side is rotated), the balance between these molten resin flow of the hollow cylindrical body in the direction of thickness continuously changes and therefore the orientation also changes continuously. As a result, the orientations of the each part in thickness direction is different. This continuous orientation is unique to this invention and, because of its continuity, can achieve a smooth absorption of impact energy. This smooth energy absorption is a feature that is difficult to acquire with the combined orientations of laminated prepregs in the impact energy absorbing member of a hollow cylindrical body which is formed of the conventional prepreg (long fiber)/thermoset resin material.

This feature indicates that the manufacturing method of the impact energy absorbing member of a hollow cylindrical body according to this invention can manufacture a variety of impact energy absorbing members with the same external dimensions by the control of the rotary motion of a mold.

No limitations are imposed on the mode of use of the impact energy absorbing member of this invention. For example, it may be used alone or two or more of the members may be used in combination, or they may be used in combination with other impact energy absorbing members or structural members and the like.

### EXAMPLES

Next, the method of manufacturing the impact energy absorbing member according to one example of this invention will be described by referring to Figure 2. In the figure, reference number 11 represents an injection molding machine, 12 a passage for a molten thermoplastic resin (molten resin), 13 a runner, 14 a rotary core, 15 an outer mold, and 16 a cylindrical layer forming portion (cavity) defined by the rotary core 14 and the outer mold 15. Designated 17 is a bearing for holding the rotating core 14, 18 a chain for driving the rotary core 14, 19 a motor for driving the chain 18, and 20 an ejector pin. A molten resin is injected from the injection molding machine 11 through the molten resin passage 12 and the runner 13 into the cavity 16. For molding a cylindrical body of the above dimensions, the rotary core is rotated in a speed range of 100-400 rpm, preferably 200-400 rpm. The molten resin injected into the cavity is rotated together with the wall surfaces as the core rotates and oriented. The bearing 17, if made of an elastic material, has a little risk of seizure during the rotation of the core. Here, a thermotropic liquid crystal polyester resin is used as the thermoplastic resin. For example, the resin may be a thermotropic liquid crystal copolyester resin which has repeating units induced from phthalic acid/isophthalic acid/4-hydroxybenzoic acid/4,4-dihydroxydiphenyl, with their molar ratio of 0.75/0.25/3/1. Observation of this resin by a polarizing microscope equipped with a hot stage shows that at temperatures 340°C or higher, the resin in a molten state exhibited an optical anisotropy.

A compound of this resin containing 30% by weight of glass fibers (with respect to the total weight of the compound) can be injection-molded by the apparatus of Figure 2 into a first hollow cylindrical layer 20 mm in outer diameter, 1 mm thick, 150 mm long and 15 g in weight as a pipelike first-stage molded product. The injection time is about 5 seconds and the cooling time about 10 second, requiring a total of about 15 seconds. By examining the outer and inner surfaces of the formed cylindrical layer to check the directions of resin flows from flow marks, it can be seen that the direction of resin flow on the outer surface almost coincides with the axial direction of the cylindrical layer and the direction of resin flow on the inner surface is inclined by about 33° to the axis.

The orientation of a hollow cylindrical body layer manufactured by the injection molding, in which the rotary core or the outer mold or both are rotated, is determined, as described above, by the balance between the molten resin flow in the same direction as the axial direction caused by the pressure applied from the injection molding machine and the molten resin flow 90° to the axial direction caused by the frictional resistance between the rotating portion and the molten resin. Thus, like this example, if there is a difference in the rotating motion between the portions that form the inner side and the outer side of the hollow cylindrical layer in the mold, i.e., between the inner inside wall and the outer inside wall of the cavity, the balance between these molten resin flow of the hollow cylindrical body layer in the direction of thickness continuously changes and therefore the orientation also changes continuously. As a result, the orientations of the each part in thickness direction is different. This orientation change, because it is continuous, contributes to achieving a smooth absorption of impact energy by the cylindrical body layer. This smooth energy absorption is a feature that is difficult to acquire with the combined orientations of laminated prepregs in the impact energy absorbing member of a hollow cylindrical shape which is formed of the conventional prepreg (long fiber)/thermoplastic resin material.

This feature indicates that this manufacturing method can manufacture a variety of impact energy absorbing members with the same external dimensions by the control of the rotary motion of a mold.

Next, with the first cylindrical layer thus obtained used as an inner mold, a second cylindrical layer is injection-molded in the similar way. That is, the first cylindrical layer is mounted on an appropriate mount fitting and this is used as a rotary core and rotated in a direction reverse to that used in the first-stage molding while injection-molding around the core, thus forming a second hollow cylindrical layer as a second-stage molded product laminated over the first hollow cylindrical layer. In this case, therefore, the cavity for forming the second hollow cylindrical layer has its inner inside wall provided by the outer wall of the first hollow cylindrical body layer and its outer inside wall provided by an outer mold whose inner diameter is larger than that of the outer mold 5 by the thickness of the second hollow cylindrical body layer.

In the impact energy absorbing member in the form of a laminated hollow cylindrical body manufactured as described above, because the rotating directions of the rotary core during the first-stage molding and the second-stage molding are opposite, the orientation direction of the second hollow cylindrical layer is oblique to the rotation axis in a crosswise direction with respect to the orientation direction of the first hollow cylindrical layer. That is, the orientation directions of the contacting surfaces of the adjoining layers differ from each other. Further, because the second hollow cylindrical body layer has an orientation which changes continuously in a way similar to the first hollow cylindrical body layer, it has similar advantages to those of the first hollow cylindrical body layer.

Next, a method of manufacturing an impact energy absorbing member of another preferred example will be described. This method differs from the preceding example in that the inner mold is fixed and the outer mold is rotated.

This thermoplastic resin, too, is the same thermotropic liquid crystal copolyester resin containing 30% by weight of glass fibers (with respect to the total weight of the compound), as in the previous example.

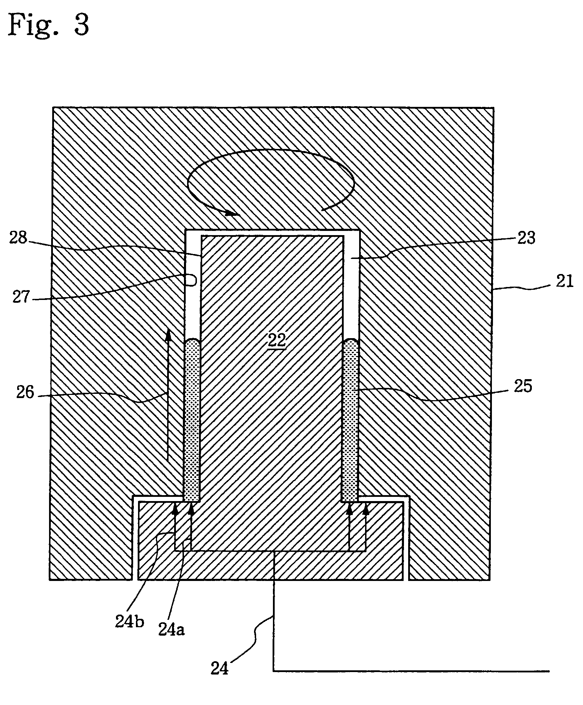

Figure 3 is a cross section showing the outline of a mold used in the first-stage molding. In the figure, reference numbers 21 and 22 represent an outer mold portion and a core mold portion, which together form a mold for injection molding. Between these mold portions is formed a cylindrical cavity 23. Denoted 24 is a passage to inject the thermoplastic resin, which branches into a first-stage passage 24a connected to a first-stage gate used for first-stage molding and a second-stage passage 24b connected to a second-stage gate used for second-stage molding.

During the first-stage molding, the molten thermoplastic resin 25 is injected from the first-stage gate and at the same time the outer mold portion 21 is rotated in a predetermined direction. The molten resin being injected from the first-stage gate moves up the cavity 23 in the direction of arrow 26. At this time, the resin on the outer side is rotated together with the inner wall of the rotating outer mold portion 21, i.e., a cylindrical outer wall surface 27 forming the cavity 23. Because an inner wall surface 28 is stationary, the outer side resin is oriented in a rotating direction to a larger extent than the inner side resin is. As a result, the first hollow cylindrical layer as the first-stage molded product is obtained whose orientation component in the rotating direction is larger on the outer side than on the inner side.

While, in the first hollow cylindrical layer thus obtained, the orientation directions on the inner and outer sides are oblique to the rotating axis in directions opposite to those of the above example, the orientation direction similarly changes continuously and thus the cylindrical layer of this example has the similar advantages to those of the above embodiment.

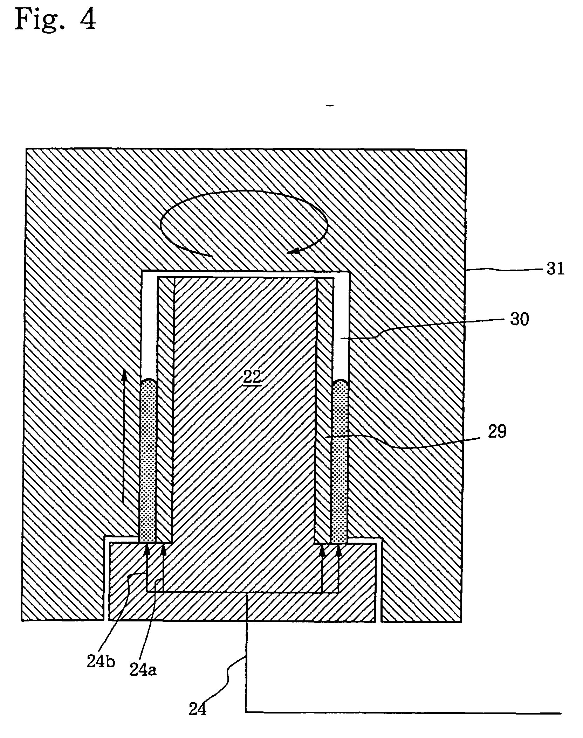

Figure 4 is a cross section showing the outline of a mold used for the second-stage molding. The core mold portion 22 is used commonly for the first-stage molding. But the first hollow cylindrical body layer 29, formed by the first-stage molding and solidified, is left as it is or mounted to form an outer wall of the core mold which constitutes the inner wall surface of a cavity 30 to form the second hollow cylindrical body layer. That is, the second hollow cylindrical body layer is formed laminated on the outer side of the first hollow cylindrical body layer 29. Accordingly, an outer mold portion 31 has the radius of its inner wall set larger than the outer mold portion 21 used for the first-stage molding in order to form the cavity 30.

After the hollow cylindrical body layer 29 formed by the first-stage molding has cooled and the outer mold portion 21 is removed and replaced with the second-stage molding outer mold portion 31, the second-stage molding is performed. The core mold portion 22 may be removed after the first-stage molding or left there. Normally it may be convenient to leave it there. During the second molding, the molten resin is injected from the second-stage gate through the passage 24b communicating to the cavity 30. At the same time, the outer mold portion 31 is rotated in a direction opposite to the rotating direction of the outer mold portion 21 used for the first-stage molding. At this time, the resin of the hollow cylindrical body layer 29 on its outer surface contacts the molten resin being injected, and due to the heat of the molten resin, partly softens or melts. The hollow cylindrical body layer 29, however, is not melted to an extent that its orientation state is fracture.

After the resin has cooled, the outer mold portion 31 is removed and the core mold portion 22 pulled out to obtain a desired laminated hollow cylindrical body. That is, in this laminated hollow cylindrical body, the second hollow cylindrical body layer whose orientation direction is oblique to the rotating axis in a crosswise direction with respect to the orientation direction of the first hollow cylindrical body layer 29 is formed laminated on the outer side of the first hollow cylindrical body layer 29, with the orientation directions of the contacting surfaces of the adjoining layers differing from each other. Further, the second hollow cylindrical body layer has an orientation the direction of which continuously changes as in the first hollow cylindrical body layer.

The hollow cylindrical body layer 29 partly softens or melts during the second-stage molding as described above, so that the resulting laminated hollow cylindrical body has an increased bonding strength between the first and second hollow cylindrical body layers. Hence, there is no need in principle to use a bonding agent between the each layer.

Because the second hollow cylindrical body layer is injection-molded during the second-stage molding on the outer side of the first hollow cylindrical layer which was formed by the first-stage molding, the resin of the second hollow cylindrical body layer shrinks toward the center as it cools and solidifies, further enhancing the bonding strength between the first and second hollow cylindrical body layers.

Thus, this invention is not limited to the above examples but various modifications may be made. For example, while in the above examples the mold portions are rotated also during the second-stage molding, it is possible to simply inject the resin without rotating any mold portions during the second-stage molding.

While the above examples form the laminated layers through the first and second molding processes, the first and second hollow cylindrical body layers may be formed separately and then bonded and laminated together with an appropriate adhesive. In that case, although the hollow cylindrical body layers can be formed in the same manner as the first hollow cylindrical body layer in the above examples, the mold portion to be rotated is made to rotate in the opposite direction between the molding of the first hollow cylindrical body layer and the second hollow cylindrical body layer.

While in the above embodiments, the rotating directions of the mold portion to be rotated during the first-stage molding and the second-stage molding are made to differ, these directions may be the same but with the rotating speed or the viscosity of the molten resin differentiated between the first and the second molding. For example, if the rotating speeds and the directions are the same in the two molding stages, the use of different viscosities of the molten resins will result in different orientations. The point is that the orientation directions on the contacting surfaces of the adjoining layers need only to differ. That is, laminating the layers having the same orientation directions leads only to an increased thickness of an ordinary laminated hollow cylindrical body and the interface between the layers fails to serve as a guide for destruction. This should be avoided.

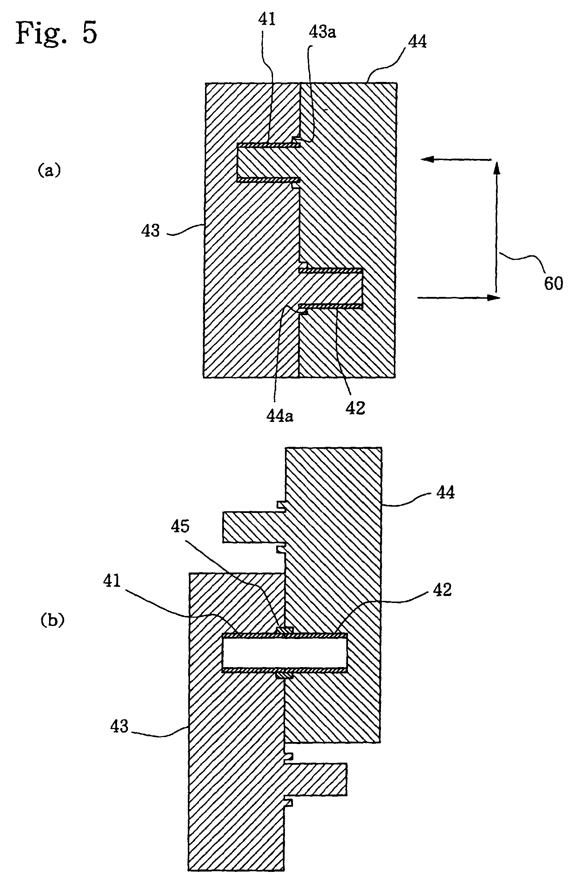

In a molding method, including the one shown in Figure 5, where divided cylindrical bodies are formed during the first-stage molding by using separated molds and then, after the separated molds are moved, a second-stage injection is performed to form a strip body; the strip body that is formed at the latter process may fuse to the divided cylindrical bodies. When the strip body is completely fused to the divided cylindrical bodies, the divided cylindrical bodies may become united, which will make the division of the cylindrical bodies meaningless. The divided cylindrical bodies and the strip body, however, can easily be prevented from virtually fusing together by performing the second-stage injection only after the divided cylindrical bodies formed by the first-stage injection has cooled sufficiently, or by using different kinds of resin in the first-stage and second-stage molding (as by using resins with different melting points). Because the dividing surfaces of the divided cylindrical bodies do not fuse together, the strip body may positively be fused to the cylindrical bodies depending on the shapes of the cylindrical bodies and strip body.

The structure of an engagement portion is determined by a combined portion of "a divided cylindrical body 41 and a mold 44" and by a combined portion of "a divided cylindrical body 42 and a mold 43" (the detailed shape is not shown). This structure of the engagement portion, however, can be set arbitrarily as a fracture mode stabilizing guide. Figures 6(a) and 6(b) are cross sections showing example structures of the engagement portions. In the figures, reference numbers 46, 47 and 49, 50 each represent divided cylindrical bodies forming one complete cylindrical body, and 48 and 51 represent a strip body.

The angle that the dividing surface forms with respect to the center axis of the cylindrical body may be set arbitrarily to other than 90 degrees, such as an oblique direction. Figure 7 shows a case where the dividing surface is set oblique. In the figure, reference numbers 52, 53 represent divided cylindrical bodies and 54 a strip body.

The engagement of the divided cylindrical bodies should preferably be performed after the divided cylindrical bodies have solidified to a certain extent so that the divided cylindrical bodies will not fuse together and hinder the function of the crushing mode stabilizing guide.

The strip bodies 48, 51, 54, 56, 57 enclosing the engagement portions, as shown in Figures 6, 7, 8 and 9, are formed as a mechanism other than to avoid the above fusing problem, to control the direction of movement of the cylindrical body to correct as far as possible the direction of impact applied to the energy absorbing member toward the direction that will cause fracture of the crushing mode stabilizing guide. This strip body, as described with reference to Figure 5, can be formed by the second-stage injection.

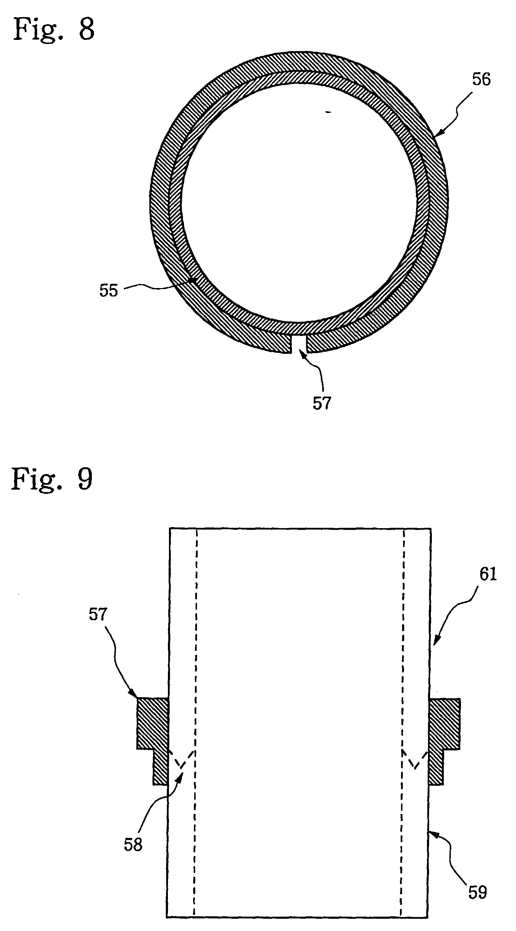

The strip body, like a strip body 56 shown in Figure 8, may have an opening 57 at one location so as not to block the destruction of the cylindrical body 55 when it absorbs energy. Further, as shown in Figure 9, a part of the strip body 57 on the side of the divided cylindrical body 59 having the crushing mode stabilizing guide 58 may be set thinner and the other part of the strip body 57 on the side of the divided cylindrical body 61, from which the stress is applied, is made thicker so that the strip body 57 does not hinder the fracture of its part on the crushing mode stabilizing guide side and functions as a reinforcement member on the stress application side.

### EXAMPLE OF TESTS

Molding material: Three molding materials, a polyamide, PBT and an LCP, are used for the injection molding in the following examples.
Polyamide: A polyamide resin (trade name: Kanebo Nylon) blended beforehand with 55% by weight, with respect to the total weight of the compound, of glass fibers (E-glass) is used.
PBT: PBT resin (polybutylene terephthalate, trade name: Kanebo PBT) blended beforehand with 30% by weight, with respect to the total weight of the compound, of glass fibers (E-glass) is used.
LCP: A thermotropic liquid crystal polyester resin blended beforehand with 30% by weight, with respect to the total weight of the compound, of glass fibers (E-glass) is used. The thermotropic liquid crystal polyester resin used here is thermotropic liquid crystal copolyester resin, which has repeating units induced from phthalic acid/isophthalic acid/4-hydroxybenzoic acid/4,4-dihydroxydiphenyl, with their molar ratio of 0.75/0.25/3/1. Observation of this resin by a polarizing microscope equipped with a hot stage shows that at temperatures 340°C or higher, the resin in a molten state exhibited an optical anisotropy.

The above three molding materials were used to form sample cylindrical bodies by the following four kinds of molding methods (1) to (4).

### Molding Method (1)

The rotary core type injection molding machine of Figure 1 was used to injection-mold the above materials into sample cylindrical bodies by rotating the inner core 4. The gate was provided at the end of the cylindrical body.

The rotary core revolution was 400 rpm. The injection time was about 5 seconds and the cooling time about 10 seconds, requiring a total of about 15 seconds.

The outer and inner surfaces of the sample cylindrical bodies obtained were examined and the directions of resin flows were checked from flow marks. It was found that the resin flow direction on the outer surface almost coincides with the axial direction of the cylindrical body and that the resin flow direction on the inner surface is oblique by about 33 degrees to the axis of the cylindrical body. The obliquity of the resin flow was similarly observed with all of the molding materials, i.e., the polyamide, PBT and LCP.

The sample cylindrical bodies molded of each material have the following dimensions.

| | |
|---|---|
| Height (in the cylindrical body axis direction): | 25 mm |
| Thickness: | 2 mm |
| Inner diameter: | 17 mm |
| Outer diameter: | 21 mm |

### Molding Method (2)

The apparatus of Figure 2 was used to form the first cylindrical bodies from each molding material by first rotating the core during the first-stage molding. The gate was provided at the end of the cylindrical body. Next, the rotary core of Figure 2 was removed and, in the place of the removed core, the first cylindrical body that was formed in the first-stage molding was mounted as a rotary core portion for an inner mold. The molding was performed again by rotating the core portion. The gate was provided at the end of the cylindrical body.

The rotation speed of the rotary core portion was 400 rpm for both first- and second-stage molding, but the direction of rotation for the second-stage molding was reversed from that of the first-stage molding.

In this way the two-layer cylindrical bodies were formed. In each molding, the materials used for the first-stage molding and the second-stage molding are the same.

The two-layer cylindrical bodies molded of each material have the following dimensions.

| | | |
|---|---|---|
| Height (in the cylindrical body axis direction): | | 25 mm |
| Thickness | (inner layer): | 1 mm |
| | (outer layer): | 1 mm |
| Inner diameter: | | 17 mm |
| Outer diameter: | | 21 mm |

### Molding Method (3)

Using a first-stage injection mold of Figure 5(a) and a second-stage injection mold of Figure 5(b), a divided cylindrical body 41 and a divided cylindrical body 42 were formed by the first-stage injection of each material, as shown in Figure 5(a). Then, the divided cylindrical bodies 41, 42 were opposed to each other as shown in Figure 5(b). Resin was injected during second-stage molding into a cavity defined by a recessed portion 43a of the mold 43 and a recessed portion 44a of the mold 44 to form a strip body 45. The detailed structure of the engagement portion is as shown in Figure 6(b) (This structure is not shown in Figure 5).

The materials used for the first-stage and second-stage molding are the same.

The cylindrical bodies molded of each material have the following dimensions.

| | |
|---|---|
| Height (in the cylindrical body axis direction): | 25 mm |
| Thickness: | 2 mm |
| Inner diameter: | 17 mm |
| Outer diameter: | 21 mm |

The dividing surface is located at almost the center of the cylindrical body height (in the cylindrical body axis direction).

### Molding Method (4)

Using a mold that has a cavity forming a space of cylindrical configuration, the above three molding materials were injection-molded into cylindrical bodies. The gate was provided at the end of the cylindrical body.

The cylindrical bodies molded of each material have the following dimensions.

| | |
|---|---|
| Height (in the cylindrical body axis direction): | 25 mm |
| Thickness: | 2 mm |
| Inner diameter: | 17 mm |
| Outer diameter: | 21 mm |

The sample cylindrical bodies formed by the above four molding methods (1) to (4) were subjected to compressive deformation tests to check their performances as the impact energy absorbing members, as detailed below.

The test results were evaluated based on the following displacement-load curve patterns. The evaluation results are summarized in a table 1.

### Test Method

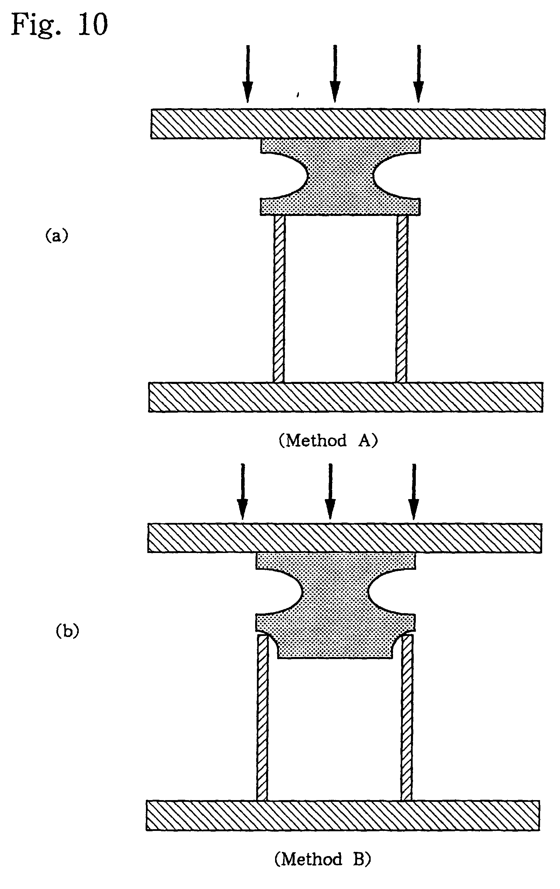

Most of the samples were tested by using a compression jig of method A in Figure 10 and sample numbers 7-9 by a jig of method B in Figure 10. The compressive deformation tests were conducted by applying a compressive load in the axial direction of the cylindrical body at a deformation rate of 1 mm/min. to obtain displacement-load curves for each cylindrical body.

The compression jigs of method A and method B have different shapes, as shown in Figure 10. The jig of method A has a flat surface in contact with the cylindrical body, while the jig of method B has a column-shaped projection, slightly smaller than the inner diameter of the cylindrical body, which protrudes from the jig body through a connecting portion having a rounded portion at the circular edge of the jig. This projection, when the jig is set in the compressive deformation test, virtually engages the sample cylindrical body being tested, as shown in Figure 10.

### Evaluation Criteria: (Evaluation is made on the basis of the displacement-load curve patterns)

"Displacement-load curve" patterns:
Pattern A corresponding to the displacement-load curve shown in Figure 11(a): "Bad"
Pattern B corresponding to the displacement-load curve shown in Figure 11(b): "Good"
Pattern C corresponding to the displacement-load curve shown in Figure 11(c): "Excellent"

### Reasons for Adoption of Evaluation Criteria:

The displacement-load curve of pattern A appears when the load (= stress) caused by displacements (= strains) is accumulated in the whole cylindrical body and then released through large-scale deformation and crushing. In more detail, this pattern results from the entire cylindrical body buckling or the appearance of a cracked weld.

The cylindrical bodies having the pattern A characteristic are not appropriate as the impact energy absorbing member because when applied with a compressive force, they do not exhibit a stable load following the deformation and because the total energy that the cylindrical bodies absorb during deformation (the area enclosed by the characteristic curve and the abscissa in the displacement-load curve) is small.

The pattern B displacement-load curve occurs when the load produced by displacement is released at an initial stage through local deformation and crushing, followed by continuous and progressive destruction of small portions that generates a stable load conforming to the deformation. In more specific terms, this pattern is produced by the partial shear fracture of the cylindrical portion proceeding continuously and progressively.

The cylindrical bodies having the pattern B characteristic somewhat lack the stability because the amount of energy they absorb in the initial phase of deformation varies greatly, but thereafter their load is stable conforming to the deformation when subjected to compression. The total amount of energy these cylindrical bodies absorb as they deform is large. These cylindrical bodies therefore are suited for use as the impact energy absorbing member and determined as "good."

The cylindrical bodies having the pattern C characteristic basically have the similar impact energy absorption characteristic to the cylindrical bodies with the pattern B characteristic, but because the amount of energy absorbed even in the initial phase of deformation does not change greatly, they have a very high stability. Furthermore, the total amount of energy they absorb during deformation is large. Because of these features, these cylindrical bodies are most suited for use as the impact energy absorbing member.

**Table 1**

| Sample number | Molding method | Molding material | Compressive test | Pattern characteristic | Initial load | Load when stable | Result of evaluation |
|---|---|---|---|---|---|---|---|
| 1 | Method (1) | Polyamide | Method A | B | | | Good |
| 2 | Method (1) | PBT | Method A | B | | | Good |
| 3 | Method (1) | LCP | Method A | C | | | Excellent |
| 4 | Method (2) | Polyamide | Method A | B | Lower than 1 | Almost equal to 1 | Good |
| 5 | Method (2) | PBT | Method A | B | Lower than 2 | Almost equal to 2 | Good |
| 6 | Method (2) | LCP | Method A | C | - | Higher than 3 | Excellent |
| 7 | Method (3) | Polyamide | Method B | B | Lower than 1 | Almost equal to 1 | Good |
| 8 | Method (3) | PBT | Method B | B | Lower than 2 | Almost equal to 2 | Good |
| 9 | Method (3) | LCP | Method B | C | - | Almost equal to 3 | Excellent |
| 10 | Method (4) | Polyamide | Method A | A | | | Bad |
| 11 | Method (4) | PBT | Method A | A | | | Bad |
| 12 | Method (4) | LCP | Method A | A | | | Bad |
| (NOTE) Initial load: In pattern B, a maximum load value when the load temporarily rises at the initial stage of displacement. Load when stable: In pattern B and C, a load that is stable regardless of the displacement. | | | | | | | |

### INDUSTRIAL APPLICABILITY

As described above, the impact energy absorbing member of this invention has its cylindrical body divided and combined together so that the division/engagement surfaces function to induce a shear fracture and thereby assure a stable and progressive destruction of the energy absorbing member.

Winding a band (strip body) on the outside or the inside, or both, of the division/engagement surfaces makes it possible to maintain and control the direction of movement of the divided cylindrical body caused by an applied impact as the member collapses due to compressive force, thus assuring a more stable and progressive destruction of the energy absorption member.

The division/engagement surfaces are set at right angles to or inclined to the axis. Alternatively, one of the division/engagement surfaces is made a destruction mode stabilizing guide which is wedge-shaped in cross section, and the other opposed division/engagement surface is made an engagement surface conforming to the wedge shape. These arrangements ensure that the stresses produced at time of impact can be applied parallelly to the center axis of the cylindrical body.

By winding a strip body along the outside or the inside, or both, of the division/engagement surfaces, the problem of fusing between the engagement surfaces can be avoided and the direction of movement of the divided cylindrical body can be controlled, which in turn enables the direction of impact applied to the energy absorbing member to be corrected as much as possible toward a direction that will cause a stable and progressive destruction.

Further, providing an opening in at least one location of the strip body allows the cylindrical body to be destroyed without hindrance as it absorbs energy.

In the hollow cylindrical body of this invention, either the outer surface or the inner surface of the hollow cylindrical body is oriented in a direction different from the axial direction of the cylindrical body, so that when the cylindrical body is applied with a compressive load in the axial direction of the cylindrical body and collapses irreversibly, a secure and gradual destruction can be obtained, assuring absorption of impact energy at a high absorption level. Further, the hollow cylindrical body of this invention has a continuous orientation and, because of its continuity, can achieve a smooth absorption of impact energy.

As described above, with the impact energy absorbing member of this invention, because the orientation directions of the contacting surfaces of the adjoining layers are made to differ from each other, the impact energy absorbing member with its laminated hollow cylindrical body injection-molded of a thermoplastic resin can be presented as the one that has a crushing mode stabilizing guide utilizing an easily destructible portion between the adjoining layers to assure a secure and gradual fracture.

Further, according to the manufacturing method of this invention, because the laminated hollow cylindrical body is formed through the first-stage molding and the second-stage molding, the impact energy absorbing member can be fabricated easily and inexpensively. Furthermore, a second hollow cylindrical layer is injection-molded during the second-stage molding on the outer side of the first hollow cylindrical layer formed by the first-stage molding, so that when the second hollow cylindrical layer cools and solidifies, its resin shrinks toward the center, increasing the bonding strength between the first and second hollow cylindrical layers.

## Claims

1. An impact energy absorbing member injection-molded of a thermoplastic resin, characterized by comprising a fracture mode stabilizing guide.

2. An impact energy absorbing member having a hollow cylindrical body according to Claim 1, characterized in that the fracture mode stabilizing guide has a construction in which at least one of orientation directions on the inner and outer sides of the cylindrical body is different from the axial direction of the cylindrical body.

3. An impact energy absorbing member according to Claim 2, characterized in that a main constituent unit of the thermoplastic resin is an aromatic ring-containing radical and the unit is included in a main chain.

4. An impact energy absorbing member according to Claim 2 or 3, characterized in that the thermoplastic resin is a thermotropic liquid crystal polymer.

5. An impact energy absorbing member according to any one of Claims 2 to 4, characterized in that the thermoplastic resin includes a fibrous filler.

6. An impact energy absorbing member according to any one of Claims 2 to 5, characterized in that the orientation direction on one of the inner and outer side of the hollow cylindrical body is at an angle of 10 degrees or more to a center axis of the hollow cylindrical body and the orientation direction on the other side is almost parallel to the center axis of the hollow cylindrical body.

7. An impact energy absorbing member having a laminated hollow cylindrical body according to Claim 1, characterized in that the fracture mode stabilizing guide has the different orientation directions each other on contacting surfaces of adjoining layers of the laminated hollow cylindrical body.

8. An impact energy absorbing member according to Claim 7, characterized in that main constituent unit of the thermoplastic resin is an aromatic ring-containing radical and the unit is included in a main chain.

9. An impact energy absorbing member according to Claim 7 or 8, characterized in that the thermoplastic resin is a thermotropic liquid crystal polymer.

10. An impact energy absorbing member according to any one of Claims 7 to 9, characterized in that the thermoplastic resin includes a fibrous filler.

11. An impact energy absorbing member having a hollow cylindrical structure according to Claim 1, characterized in that the fracture mode stabilizing guide is divided by at least one plane crossing the center axis of the cylindrical body and the divided guides are engaged with or opposed to each other at said dividing plane.

12. An impact energy absorbing member according to Claim 11, characterized in that a strip body is provided on at least one of the outer side or the inner side of the engaged or opposed portions.

13. An impact energy absorbing member according to Claim 11 or 12, characterized in that a structure has a function to induce a shear fracture at the engaged or opposed portions.

14. An impact energy absorbing member according to Claim 13, characterized in that the functional structure provided at the engaged or opposed portions for inducing a shear fracture is shaped like a wedge.

15. An impact energy absorbing member according to Claim 12, characterized in that the strip body has an opening.

16. A method of manufacturing an impact energy absorbing member deseribed in Claim 7, characterized in that:
a first-stage molding process to inject a thermoplastic resin into a cylindrical cavity to injection-mold a first hollow cylindrical body layer; and
a second-stage molding process following the first-stage molding process to form another cylindrical cavity adjacent to the first hollow cylindrical layer and inject a thermoplastic resin into this cavity to injection-mold a second hollow cylindrical body layer;
wherein, in at least the first- or second-stage molding process, the injection of the thermoplastic resin is performed while a cylindrical inner wall surface and/or a cylindrical outer wall surface, both opposed to each other to form the cylindrical cavity, is or are rotated relative to each other in order to form an impact energy absorbing member having a laminated hollow cylindrical body whose orientation directions on contacting surfaces of adjoining layers differ from each other.

17. A method of manufacturing an impact energy absorbing member according to Claim 16, characterized in that the second hollow cylindrical body layer is injection-molded outside of the first hollow cylindrical layer.
